Europäisches Patentamt

European Patent Office

Office européen des brevets

(19)

(11) Publication number: **0 017 687**
**B1**

(12) **EUROPEAN PATENT SPECIFICATION**

(45) Date of publication of patent specification: **28.09.83**

(51) Int. Cl.³: **B 28 B 3/20, B 23 P 6/00**

(21) Application number: **79302682.4**

(22) Date of filing: **23.11.79**

(54) **Method of producing ceramic honeycomb structural bodies.**

(30) Priority: **21.04.79 JP 49220/79**

(43) Date of publication of application:
**29.10.80 Bulletin 80/22**

(45) Publication of the grant of the patent:
**28.09.83 Bulletin 83/39**

(84) Designated Contracting States:
**BE DE FR GB IT**

(56) References cited:
**NL - A - 6 813 245**
**US - A - 3 930 522**

(73) Proprietor: **NGK INSULATORS, LTD.**
**2-56, Suda-cho, Mizuho-ku**
**Nagoya-shi, Aichi 467 (JP)**

(72) Inventor: **Suzuki, Kazuo**
**No. 96, Saiwai-cho**
**Inazawa-city, 492 (JP)**

(74) Representative: **Haigh, Charles Roy et al,**
**J.A. KEMP & CO. 14 South Square Gray's Inn**
**London WC1R 5EU (GB)**

Courier Press, Leamington Spa, England

# Method of producing ceramic honeycomb structural bodies

The present invention relates to a method of producing ceramic honeycomb structural bodies.

There are known ceramic honeycomb structural bodies having a large number of parallel axial cells which are confined by relatively thin lattice-like partition walls. The cells give the bodies an open frontal area of about 60—90%, preferably 65—85%. Such honeycomb structural bodies have been used for catalyst supports for the purpose of removing harmful CO, HC and $NO_x$ from exhaust gases by passing the exhaust gas through the cells so as to react it with a catalyst supported on the surface of the partition wall. The honeycomb structural body can be manufactured by a method wherein a ceramic batch is extruded through an extrusion die to give a ceramic green body, and the ceramic green body is dried and fired, as described in U.S. Patent Specification No. 3,824,196.

U.S. Patent Specification No. 3,930,522 also describes such an article and refers to the possibility of coating the die plate for such a process with electroless nickel.

In the dies for extruding ceramic honeycomb structural bodies, a large number of slits are formed in the front surface of the die and are worn rapidly due to the abrasion by the ceramic batch extruded through the slits, and as a result the slit width becomes greater. Therefore, the thickness of partition walls between adjacent cells in the resulting honeycomb structural body becomes larger as the die is used. That is, when slits of a die are somewhat worn, the die can be no longer used to give accurately formed bodies. Under present practice the die is at this point thrown away. Accordingly, expensive dies have hitherto always been discarded.

Further, the honeycomb structural bodies produced may have circular, race track or oval cross-sectional shapes depending upon the demand. Therefore, a mask having an opening of a shape corresponding to the desired cross-sectional shape of the honeycomb structural body, is located in front of the die. Some of the slits in the peripheral portion of the die are closed by the mask and only those slits are not worn in use due to the absence of extrusion through them.

As a result, the widths of the other, worn slits, are greater than the widths of closed and unused slits in the peripheral portion of the die. Therefore, when the originally used mask is replaced by a mask with a differently shaped or sized opening, the slit width in the peripheral portion of the die is different from that in the centre portion thereof, and the extrusion rate and amount of ceramic batch are locally different, and a satisfactory honeycomb structural body can not be formed. Further, even when a honeycomb structural body can be extruded, it cracks or deforms during the drying and firing steps following the extrusion, and the resulting honeycomb structural body is not of a satisfactory shape. Accordingly, it is impossible to produce proper honeycomb structural bodies having different cross-sectional shapes by varying only the mask of one extrusion die. Thus, both when masks having different openings are used, or when equal wear takes place, the die can not be reclaimed and is wastefully disposed of.

According to the present invention there is provided a method of producing ceramic honeycomb structural bodies including the steps of creating an extrusion die by forming a lattice of slits having a given depth in a front surface of a matrix, forming inlets in the rear of the matrix and forming a metal film at least on the surfaces of the slits by electroless nickel plating such that the slits attain the desired initial width, and extruding ceramic honeycomb structural bodies of an outer sectional shape defined by the die or by a mask placed over the die, and a wall thickness defined by the width of the slits, characterised in that upon wear of the die, and for changes of desired outer sectional shape, the die is reclaimed by forming a further metal film at least on the surfaces of the slits by electroless nickel plating to regain the desired slit width and further ceramic honeycomb bodies are extruded with an outer shape defined by the die or by the or another mask placed over the die and a wall thickness defined by the width of the slits.

As a result of the present invention, expensive dies can be reused, both upon wear and upon change of extrusion outer shape or size.

Figure 1 is a vertical sectional view of an extrusion die according to the present invention;

Figure 2 is a horizontal sectional view of the die shown in Figure 1; and

Figure 3 is a plan view of the die shown in Figure 1 in reduced scale, illustrating the mode of mounting a mask having an oval opening.

The present invention will be explained in more detail referring to the drawings.

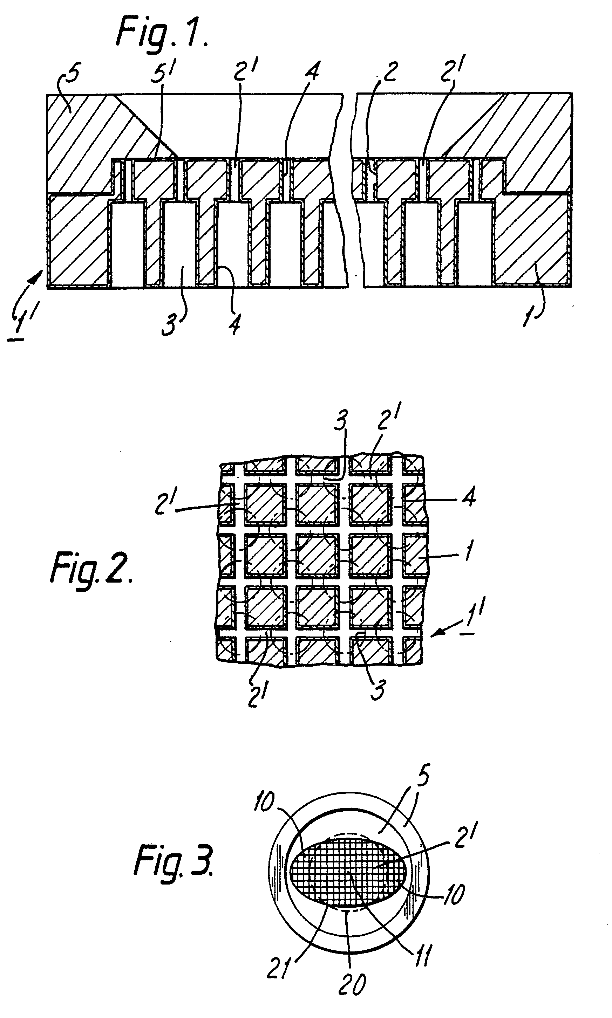

In Figures 1 and 2, the numeral 1 represents a matrix of an extrusion die similar to the conventional extrusion die of this kind, which is provided at its front surface with a large number of slits 2 crossed at a right angle with each other in the form of lines of checkerboard and bored in the matrix towards its rear surface in a given depth, and at its rear surface with a large number of feed inlets 3, having a circular cross-sectional shape, which feed inlets are bored in the matrix towards its front surface and are communicated to the slit 2 so as to supply a ceramic batch into the slits 2 from the rear surface side of the matrix. Further, in the extrusion die of the present invention, a metal film 4 is plated on the surface of the slits 2 bored in the matrix 1 so as to form slits 2' having a given width. In the die shown in Figure 1, the metal film 4 is plated on both the surface of slits 2 and the surface of feed inlets 3, but the metal film 4 may be plated only on the surface of slits 2.

When it is intended to produce a honeycomb structural body having a certain outer shape, for example, a circular cross-section, by the use of the above described extrusion die 1', a mask 5 having a circular opening confined by its lower edge 5' is arranged on the front surface of the die, and a ceramic batch is continuously supplied to the slits 2' through the feed inlets 3 in a conventional manner to extrude a long honeycomb structural body from the slits 2', and then the extruded honeycomb structural body is cut into a given length. In the extrusion die 1', since the width of a large number of the slits 2' is made into a given width by plating a metal film 4 on the slits 2, all the slits 2' have a uniform given width, and as the result the thickness of all partition walls between adjacent cells formed in the extruded honeycomb structural body is uniform, and the honeycomb structural body has a proper structure. However, when the metal film 4 plated on the surface of the slit 2 is worn due to the abrasion by the ceramic batch during the operation of the die to form a slit width larger than the given width of the slit 2', the die can be no longer used. The extrusion die 1' having such worn metal film 4 can be reclaimed in the following manner. That is, before the wear reaches the slit 2 of the matrix 1, the matrix is separated from the mask 5, and then, for example, immersed in an aqueous solution of nitric acid or other acid, which can dissolve the metal film, to remove the metal film 4 remaining in the slit 2 and to obtain the matrix 1. Then, a metal film 4 is again plated on the surface of at least the slit 2. As the result, a metal film 4 having a uniform thickness can be formed on the slit 2, and the width of slit 2' can be made into the original given width, and the die is reclaimed as an extrusion die. Of course, the step for removing the remaining metal film can be omitted occasionally.

Further, as illustrated in Figure 3, when the above described mask 5 having a circular opening 20 is replaced by a mask 5 having an opening different from circular shape, for example, a mask 5 having an oval opening 21, slits 2' which have not passed the ceramic batch when the opening is circular, that is, slits 2' which are located near the peripheral portion 10 of the die and have not been worn by the ceramic batch are opened by the opening in the longitudinal direction of the oval. This fact means that the width of newly opened slits which are located near the peripheral portion 10 of the die and have not been worn by the ceramic batch is different from the width of slits, which are located at the centre portion 11 of the die and have been worn by the ceramic batch. That is, the slits 2' are not uniform in the width.

Accordingly, when it is intended to produce a honeycomb structural body having a cross-sectional shape different from the original cross-sectional shape, the thicknesses of partition walls between adjacent cells of the honeycomb structural body are not uniform, and the extrusion die 1' can be no longer used. However, according to the present invention, such extrusion die can be reclaimed in the same manner as described above, and the present invention can eliminate the drawback of conventional extrusion die, which is obliged to be discarded wastefully.

The plating method carried out in the present invention may be as specifically disclosed in our copending E.P.C. Application EP—A—17686 entitled as "Method of producing a die for extruding a ceramic batch into a honeycomb structural body and a die produced by such method" and filed on the same day as the present Application.

The following examples are given for the purpose of illustration of this invention and are not intended as limitations thereof.

### Example 1

Nickel film having a thickness of 0.087 mm was plated on a matrix made of steel and having slits of 0.324 mm width formed on its surface by the electroless plating to produce an extrusion die having slits of 0.150 mm width. A honeycomb structural body was extruded through the extrusion die until the slit width became 0.172 mm due to the abrasion of the nickel film. Then, the worn die was immersed in a 65% aqueous solution of nitric acid for about 3 hours to dissolve and remove chemically the nickel film remaining in the slit, washed with water, and then subjected to an electroless plating of nickel in the commonly known method to reclaim an extrusion die having the same slit width as the originally given slit width.

### Example 2

Nickel film having a thickness of 0.087 mm was plated on a matrix made of steel and having slits of 0.324 mm width formed on its surface by the electroless plating to produce an extrusion die having slits of 0.150 mm width. A mask having a circular opening of 100 mm diameter was arranged on the front surface of the die. A honeycomb structural body was extruded through the extrusion die until the slit width became 0.163 mm due to the abrasion of the nickel film by a ceramic batch passed through the slits. Then, the extrusion was stopped, and a large size mask having oval opening, whose longitudinal diameter was 200 mm, was arranged on the front surface of the die in place of the above described mask having a circular opening, and a further extrusion was again started. In this case, the width of 0.150 mm of slits, whose metal film had not been worn due to the absence of passing through of the ceramic batch, was different from the width of 0.163 mm of the above described worn slits, and therefore there was a difference between the unworn slits and the worn slits in the extrusion rate and amount of a ceramic batch in the second extrusion, and a proper honeycomb structural body was not able to be obtained. Therefore, the die, after the first mask having a circular opening was removed from the die and before the second mask having an oval opening was arranged on the surface of the die, was immersed in a 65% aqueous solution of nitric acid for about 3.5 hours to dissolve and remove chemically the nickel film remaining in the slits, washed with water, and then subjected to an electroless plating by a commonly used method to reclaim an extrusion die having the same slit width as the original given slit width. When the reclaimed extrusion die was used, a honeycomb structural body having a proper oval shape was able to be obtained.

**Claims**

1. A method of producing ceramic honeycomb structural bodies including the steps of creating an extrusion die by forming a lattice of slits (2) having a given depth in a front surface of a matrix (1), forming inlets (3) in the rear of the matrix and forming a metal film (4) at least on the surfaces of the slits by electroless nickel plating such that the slits (2') attain a desired initial width, and extruding ceramic honeycomb structural bodies of an outer sectional shape defined by the die or by a mask (5) placed over the die, and a wall thickness defined by the width of the slits (2'), characterised in that upon wear of the die and for changes of desired outer sectional shape, the die is reclaimed by forming a further metal film (4) at least on the surfaces of the slits (2) by electroless nickel plating to regain the desired slit width and further ceramic honeycomb structural bodies are extruded with an outer shape defined by the die or by the or another mask (5) placed over the die and a wall thickness defined by the width of the slits (2').

2. A method according to claim 1, characterised in that the metal film (4) remaining in the die is removed before a metal film is again plated.

3. A method according to claim 1 or 2, characterised in that the nickel film (4) formed by the electroless plating and remaining in the die is removed by the use of nitric acid before a metal film is again formed.

**Revendications**

1. Procédé d'obtention de corps à structure en nid d'abeilles en matière céramique comportant les étapes consistant à créer une filière d'extrusion en formant un réseau de fentes (2) présentant une profondeur donnée dans une surface frontale d'une matrice (1), à former des orifices d'admission (3) dans l'arrière de la matrice et à former une pellicule métallique (4) au moins sur les surfaces des fentes par dépôt chimique de nickel de telle façon que les fentes (2') atteignent une largeur initiale désirée, et à extruder des corps à structure en nid d'abeilles en matière céramique à profil de section extérieur défini par la matrice ou par un masque (5) placé sur la matrice, et à épaisseur de paroi définie par la largeur des fentes (2'), caractérisé en ce qu'en cas d'usure de la matrice et lorsqu'il s'agit de modifier le profil de section extérieur désiré, on régénère la matrice en formant une nouvelle pellicule métallique (4) au moins sur les surfaces des fentes (2) par dépôt chimique de nickel afin de rétablir la largeur de fentes désirée et en ce que l'on extrude de nouveaux corps à structure en nid d'abeilles en matière céramique à profil extérieur défini par la matrice ou par le ou un autre masque (5) placé sur la matrice et à épaisseur de paroi définie par la largeur des fentes (2').

2. Procédé selon la revendication 1, caractérisé en ce que la pellicule métallique (4) subsistant dans la matrice est enlevée avant nouveau dépôt d'une pellicule métallique.

3. Procédé selon la revendication 1 ou 2, caractérisé en ce que la pellicule de nickel (4) formée par dépôt chimique et subsistant dans la matrice est enlevée à l'acide nitrique avant nouvelle formation d'une pellicule métallique.

**Patentansprüche**

1. Verfahren zum Herstellen von keramischen Wabenstrukturkörpern, das die Schritte enthält, eine Strangpreßform dadurch herzustellen, daß in einer Frontfläche einer Matrix (1) ein Gitter von Schlitzen (2) mit einer vorgegebenen Tiefe, auf der Rückseite der Matrix Einlässe (3) und zumindest auf den Oberflächen der Schlitze ein Metallfilm (4) durch stromlose Vernickelung derart, daß die Schlitze (2') eine gewünschte Anfangsbreite erhalten, ausgebildet werden, und keramische Wabenstrukturkörper mit einer durch die Form oder eine über die Form gesetzte Maske bestimmten äußeren Querschnittsform und einer durch die Breite der Schlitze (2') bestimmten Wandstärke strangzupressen, dadurch gekennzeichnet, daß bei Abnützung der Form und zu Änderungen der gewünschten äußeren Querschnittsform die Form durch Ausbilden eines weiteren Metallfilmes (4) zumindest auf den Oberflächen der Schlitze (2) durch stromlose Vernickelung zum Zurückgewinnen der gewünschten Schlitzbreite regeneriert wird und weitere keramische Wabenstrukturkörper mit einer durch die Form oder dieselbe oder eine andere über die Form gesetzte Maske (5) bestimmten äußeren Gestalt und einer durch die Breite der Schlitze (2') bestimmten Wandstärke stranggepreßt werden.

2. Verfahren nach Anspruch 1, dadurch gekennzeichnet, daß der in der Form noch vorhandene Metallfilm (4) entfernt wird, bevor ein Metallfilm neu aufgebracht wird.

3. Verfahren nach Anspruch 1 oder 2, dadurch gekennzeichnet, daß der durch stromloses Überziehen gebildete und in der Form noch vorhandene Nickelfilm (4) mittels Salpetersäure entfernt wird, bevor ein Metallfilm neu gebildet wird.

**Fig. 1.**

**Fig. 2.**

**Fig. 3.**